# FASCICULE DE BREVET EUROPEEN

(11) **EP 2 983 991 B1**
(45) Date de publication et mention de la délivrance du brevet: **04.01.2017**
(21) Numéro de dépôt: 14715604.6
(22) Date de dépôt: 07.04.2014
(51) Int. Cl.: B64G 1/00, B64G 1/64, B64G 1/10

(54) **SYSTÈME DE SATELLITES COMPORTANT DEUX SATELLITES FIXÉS L'UN À L'AUTRE ET PROCÉDÉ POUR LEUR MISE EN ORBITE**
SATELLITENSYSTEM MIT ZWEI MITEINANDER VERBUNDENEN SATELLITEN UND VERFAHREN ZUM ABSCHUSS DAVON IN DEN ORBIT
SATELLITE SYSTEM COMPRISING TWO SATELLITES ATTACHED TO EACH OTHER AND METHOD FOR LAUNCHING THEM INTO ORBIT

(30) Priorité: 09.04.2013 FR 1300813
(43) Date de publication de la demande: 17.02.2016
(73) Titulaire: Airbus Defence and Space SAS, 78130 Les Mureaux (FR)
(72) Inventeur: SAUZAY, Emmanuel, F-31560 Monestrol (FR); CHABERT, Nathanael, F-31000 Toulouse (FR)
(74) Mandataire: Ipside
(86) Numéro de dépôt international: PCT/EP2014/056924
(87) Numéro de publication internationale: WO 2014/166866

(56) Documents cités:
- EP-A2- 1 038 772
- WO-A1-92/00223
- US-A1- 2008 149 776
- US-A1- 2008 237 399

## Description

La présente invention s'inscrit dans le domaine de la mise en orbite de satellites. Plus particulièrement, elle concerne un système de satellites comportant au moins deux satellites fixés l'un à l'autre, ainsi qu'un procédé de mise à poste sur son orbite de mission de chacun desdits deux satellites, par une même opération de lancement depuis la surface terrestre.

### Contexte de l'invention et problème posé

La mise à poste d'un satellite sur son orbite de mission nécessite la réalisation d'opérations de lancement depuis la surface terrestre, au moyen d'un véhicule spécifiquement dédié, couramment nommé véhicule lanceur. Ce véhicule lanceur comporte une coiffe détachable sous laquelle le satellite est fixé et protégé durant une phase du lancement, et il est apte à injecter le satellite dans une orbite initiale, dite orbite de transfert, depuis laquelle le satellite est ensuite transféré jusqu'à son orbite de mission au moyen de son propre système de propulsion.

Le coût d'une opération de lancement et d'un véhicule lanceur s'avérant très onéreux, il a été proposé par l'art antérieur d'utiliser un même véhicule lanceur pour l'injection simultanée ou quasi-simultanée dans l'orbite initiale d'une pluralité de satellites. Plusieurs stratégies ont été proposées à cet effet.

A titre d'exemple, il a été proposé par l'art antérieur de fixer une pluralité de satellites sur une structure de soutien assemblée au véhicule lanceur, telle qu'un anneau ou une structure multi-étages. Une telle structure de support ajoute cependant au poids de l'ensemble, ce qui implique, pour un lanceur à capacité de lancement donnée, de restreindre la charge utile équipant les satellites, ou d'augmenter la capacité du lanceur et donc le coût du lancement. Enfin, une telle solution nécessite de développer des satellites de configuration spécifique et standardisée adaptée à la structure de support.

Il a autrement été proposé par l'art antérieur, par exemple dans le document US-A-2008/0237399, d'empiler une pluralité de satellites les uns sur les autres dans un véhicule lanceur, puis, une fois leur injection dans l'orbite initiale réalisée, de les transférer les uns après les autres, séquentiellement, dans leur orbite de mission. Le gain procuré par une telle solution est cependant limité, notamment en raison de la multiplication des lourds systèmes de propulsion et réserves d'ergol équipant chaque satellite et nécessaires à son transfert ultérieur dans son orbite de mission. Là encore, ceci implique soit d'augmenter la capacité de lancement du véhicule lanceur, et par là-même le coût du lancement, soit de diminuer la masse de charge utile équipant les satellites.

Afin de pallier cet inconvénient, il a été envisagé de réaliser un partage de poussée entre deux satellites lancés par un même véhicule lanceur, pour leur transfert de l'orbite initiale à l'orbite de mission, et plus particulièrement de faire entièrement réaliser cette poussée par un premier des satellites, dont la taille est supérieure à celle du second satellite, principalement en raison du fait que ce premier satellite est alors pourvu d'un système de propulsion et d'une réserve d'ergol aptes à assurer un transfert de l'ensemble des satellites de l'orbite initiale à l'orbite de mission. Une telle solution permet de diminuer le rapport entre le coût de lancement et la masse de charge utile équipant les satellites. Elle a été envisagée pour de nombreuses missions spatiales, parmi lesquelles, par exemple, on peut citer le satellite chilien FASAT-Alpha qui était monté sur le satellite ukrainien SICH-1, lancé en 1995, et qui devait se séparer une fois le satellite ukrainien à poste sur une orbite de mission terrestre, pour mener sa propre mission. L'étude FFMO (pour l'anglais Free Flying Micro Operator), qui a fait l'objet d'un rapport pour l'ESA en 1999, divulguait également le concept d'un microsatellite fixé sur un satellite, l'ensemble étant mis à poste en orbite géostationnaire, et le microsatellite se séparant alors du satellite pour assurer une mission spécifique sur l'arc géostationnaire.

En outre, on connaît le document US 2008/149776 A1, qui est considéré comme l'état de la technique le plus proche et divulgue le préambule de la revendication 1.

### Objectifs de l'invention

La présente invention est basée sur un tel principe de partage de poussée entre un premier satellite de capacité de propulsion importante, et un deuxième satellite de plus petite taille et de capacité de propulsion limitée. Plus particulièrement, la présente invention vise à proposer un système pour la mise à poste sur leur orbite de mission d'une pluralité de satellites lancés simultanément depuis la surface terrestre par un même véhicule lanceur, qui remédie aux inconvénients des systèmes proposés par l'art antérieur, notamment à ceux exposés ci-avant, et qui permet, en particulier, non seulement de réduire le coût de lancement simultané de la pluralité de satellites en minimisant la masse des systèmes de propulsion équipant les satellites, mais également d'optimiser l'occupation du volume disponible sous la coiffe des véhicules lanceurs standards, ceci sans nécessiter d'imposer aux satellites lancés une configuration particulière et standardisée.

Des objectifs supplémentaires de l'invention sont que ce système ne nécessite que peu d'équipement électrique / électronique spécifique, et qu'il ne génère pas de débris dans l'espace.

### Exposé de l'invention

A cet effet, il est proposé selon la présente invention un système de satellites comportant un premier satellite, dit satellite porteur, et un deuxième satellite, dit satellite passager, chacun de ces satellites comportant une face Terre. La face Terre des satellites est ici définie de manière classique en elle-même, c'est-à-dire comme la face du satellite globalement dirigée vers la Terre lorsque le satellite est à poste dans son orbite de mission, cette face étant sensiblement perpendiculaire à l'axe longitudinal du satellite, dit axe Terre, joignant alors le centre de masse du satellite et le centre de la Terre. La face Terre du satellite porte généralement les instruments de communication du satellite, tels que les senseurs et antennes de télécommunication, contrôle, télémétrie, etc.

Dans le système selon l'invention :
- le satellite passager est fixé au satellite porteur par des moyens d'accrochage qui sont libérables sur commande pour provoquer la séparation du satellite porteur et du satellite passager,
- le satellite passager comporte des moyens de propulsion aptes à réaliser son maintien en orbite, dans son orbite de mission, et le cas échéant son transfert, en fin de vie, dans son orbite cimetière,
- et le satellite porteur comporte des moyens de propulsion aptes à réaliser un changement d'orbite du système de satellites, comportant le satellite porteur et le satellite passager qui lui est fixé, de l'orbite de transfert à l'orbite de mission du satellite passager, et le cas échéant un changement d'orbite du satellite porteur seul de l'orbite de mission du satellite passager à l'orbite de mission du satellite porteur, ainsi que le maintien du satellite porteur dans cette dernière, et son transfert, en fin de vie, dans son orbite cimetière.

En outre, le satellite passager est fixé sur la face Terre du satellite porteur, de manière telle que la face Terre du satellite passager est sensiblement perpendiculaire à la face Terre du satellite porteur.

On entend, par sensiblement perpendiculaire, le fait que le satellite passager n'est pas fixé au satellite porteur par sa face Terre, ou par sa face dite anti-Terre opposée, mais par une autre de ses faces, de telle sorte que sa face Terre se trouve globalement perpendiculaire, à quelques degrés près, plus particulièrement à un angle d'une valeur inférieure à 10 degrés près, à la face Terre du satellite porteur prise dans sa globalité.

Une telle disposition du satellite passager par rapport au satellite porteur, qui est lui-même fixé dans le véhicule lanceur par une face dite anti-Terre opposée à la face Terre, s'avère tout à fait avantageuse du point de vue de l'optimisation de l'occupation du volume sous coiffe du lanceur, qui présente typiquement une section sensiblement circulaire décroissante vers son extrémité supérieure. En effet, une telle disposition permet avantageusement, en fonction de la configuration de lancement souhaitée, et des missions auxquelles les satellites sont destinés, dans un volume sous coiffe du véhicule lanceur donné :
- d'intégrer un satellite passager équipé d'un volume important de charge utile, et notamment d'une quantité importante d'instruments disposés sur sa face Terre, une augmentation de surface de cette dernière étant alors peu contrainte par la diminution progressive de diamètre de la coiffe du véhicule lanceur,
- et/ou d'empiler un ou plusieurs satellites passagers supplémentaires sur le premier satellite passager, cette pluralité de satellites pouvant alors être lancée simultanément à coût réduit,
- et/ou d'empiler sur la face Terre du satellite porteur des senseurs et/ou antennes nécessitant un large champ de vue vers la Terre, l'impact de l'accommodation du satellite passager sur le satellite porteur, et sur l'accommodation de tels équipements, sur la face Terre de ce dernier, étant minimisé par une telle disposition.

Selon l'invention, le satellite passager présente une taille largement inférieure à celle du satellite porteur, principalement en raison de la capacité réduite de ses moyens de propulsion, comprenant le système de propulsion et la réserve d'ergol associée, qui sont de préférence configurés pour être inaptes à assurer un transfert du satellite passager de l'orbite initiale à son orbite de mission.

Dans une séquence de mise à poste des satellites entrant dans la constitution du système de satellites selon l'invention, ces satellites sont initialement disposés, sur la surface terrestre, dans un même véhicule lanceur, sous la coiffe de ce dernier, ceci de manière classique en elle-même. La fixation à ce véhicule lanceur est réalisée au niveau du satellite porteur, et de manière telle que le satellite passager se trouve disposé au-dessus du satellite porteur, dans la configuration d'utilisation normale du lanceur, côté extrémité supérieure de la coiffe. Le véhicule lanceur est classique en lui-même, et comporte des moyens de propulsion et des moyens de guidage aptes à assurer son lancement depuis la Terre et l'injection du système de satellites dans l'orbite initiale, généralement dans une trajectoire de transfert terrestre basse.

Une fois cette injection réalisée, le satellite porteur et le satellite passager, toujours fixés l'un à l'autre, poursuivent leur trajet de manière autonome jusqu'à atteindre la position orbitale appropriée pour le satellite passager.

Selon des modes de réalisation particuliers, l'invention répond en outre aux caractéristiques suivantes, mises en oeuvre séparément ou en chacune de leurs combinaisons techniquement opérantes.

Les moyens d'accrochage du satellite passager sur le satellite porteur peuvent être de tout type classique en lui-même. Les moyens non générateurs de débris à leur libération, tels que des dispositifs pyrotechniques ou des anneaux mécaniques, sont particulièrement préférés dans le cadre de l'invention. Préférentiellement, ces moyens d'accrochage sont en outre choisis pour générer des niveaux de chocs faibles afin de ne pas impacter la performance en vol des équipements du satellite porteur se trouvant sur sa face Terre, à leur proximité. A titre d'exemples de tels moyens d'accrochage, on peut citer le système dit « cup and cone », les boulons pyrotechniques ou les mécanismes de type « clamp-band » couramment mis en oeuvre au niveau des interfaces satellite - lanceur. De tels systèmes d'accrochage sont bien connus de l'homme du métier.

Dans des modes de réalisation particuliers de l'invention, particulièrement avantageux, le satellite porteur et le satellite passager ne partagent aucun bus de données, si bien que leur assemblage et leur mise en oeuvre ne nécessitent qu'une interface électrique / électronique très simple. Les analyses de propagation de données et la validation système complète sont par conséquent largement simplifiées, et le risque de propagation de panne entre le satellite porteur et le satellite passager sont avantageusement réduits. Il n'est ainsi pas nécessaire, avant le lancement, de réaliser une étude de compatibilité entre les satellites, et des satellites de tous types, y compris de types différents, peuvent entrer sans requérir de modifications substantielles dans la constitution du système de satellites selon l'invention.

Dans des modes de réalisation particuliers de l'invention, le système comporte des moyens d'asservissement de la mise en marche du satellite passager à la libération des moyens d'accrochage pour la séparation du satellite porteur et du satellite passager. Le satellite passager demeure ainsi passif tant qu'il est fixé au satellite porteur, sa mise en marche s'effectuant avantageusement automatiquement à sa séparation du satellite porteur. Dans des modes de réalisation particuliers de l'invention, ces moyens d'asservissement sont disposés dans le satellite passager.

De manière générale, l'interface entre le satellite porteur et le satellite passager est préférentiellement réduite au strict minimum, à une interface mécanique, et, le cas échéant, à des échanges thermiques très faibles, de préférence inférieurs à 4 W.

Dans des modes de réalisation particuliers de l'invention, le système de satellites comporte des moyens de réchauffage du satellite passager, comprenant des lignes de réchauffage, équipées de thermistances, couramment nommées harnais de réchauffage, localisées dans le satellite passager, et des moyens de commande et d'alimentation électrique de ces lignes de réchauffage localisés dans le satellite porteur. Ces moyens sont préférentiellement configurés pour obtenir une puissance de réchauffage inférieure à 300 W. Un tel harnais de réchauffage permet avantageusement de réchauffer le satellite passager pendant la phase de lancement et la phase de transfert d'orbite. Il constitue une extension du propre harnais de réchauffage du satellite porteur. Ce harnais est de préférence configuré pour être rendu inutilisable après la séparation avec le satellite porteur. Les connecteurs d'interface sont classiques en eux-mêmes, et peuvent notamment être similaires aux connecteurs ombilicaux d'interface lanceur.

Dans des modes de réalisation particulièrement préférés de l'invention, le satellite porteur comporte une structure rigide, dite de support, sensiblement cylindrique, qui définit l'axe longitudinal, dit axe Terre, du satellite porteur s'étendant entre la face Terre et la face anti-Terre opposée de ce dernier. Le satellite passager est fixé sur cette structure de support, de préférence sensiblement centré sur l'axe longitudinal du satellite porteur. Une telle structure de support, classique en elle-même, procure au satellite porteur des propriétés de résistance mécanique, en particulier aux contraintes longitudinales, et de stabilité améliorées. Cette structure supporte en particulier les systèmes d'alimentation, contrôle, télémétrie, communication, etc., du satellite porteur.

Un tel mode de réalisation permet notamment de fixer, sur la face Terre du satellite porteur, un satellite passager de masse élevée, cette masse étant avantageusement en grande partie attribuée à la charge utile équipant le satellite passager, ceci sans nécessiter de modifications spécifiques de la structure du satellite porteur pour lui permettre de supporter le poids du véhicule passager.

Selon une caractéristique particulièrement avantageuse de l'invention, le système de satellites peut comporter une pluralité de satellites passagers empilés les uns au-dessus des autres sur la face Terre du satellite porteur, la face Terre de chacun de ces satellites passagers étant sensiblement perpendiculaire à la face Terre du satellite porteur. Ces satellites passagers, tous pourvus de moyens de propulsion aptes à réaliser leur maintien en orbite, dans l'orbite de mission, et le cas échéant leur transfert, en fin de vie, dans l'orbite cimetière, et préférentiellement inaptes à assurer le transfert de l'orbite initiale à l'orbite de mission, peuvent être identiques ou différents, et répondent préférentiellement à l'une ou plusieurs des caractéristiques décrites ci-avant.

Préférentiellement, cette pluralité de satellites passagers est empilée selon un même axe, de préférence selon l'axe longitudinal du satellite porteur.

Dans de tels modes de réalisation particuliers du système de satellites selon l'invention, il est en outre particulièrement avantageux que le satellite porteur réponde à la caractéristique énoncée ci-avant, selon laquelle il comporte une structure de support rigide en définissant un axe longitudinal, et que l'empilement de satellites passagers soit réalisé sur cette structure de support.

Selon un autre aspect, l'invention concerne un ensemble comportant un véhicule lanceur dans lequel est disposé un système de satellites répondant à l'une ou plusieurs des caractéristiques ci-avant.

Un troisième aspect de l'invention concerne un procédé de mise à poste sur son orbite de mission de chacun des satellites d'un ensemble de satellites comportant un premier satellite, dit satellite porteur, et un deuxième satellite, dit satellite passager, préférentiellement de plus petite taille que le satellite porteur, chacun de ces satellites comportant une face Terre.

Ce procédé comprend, en première étape a), la formation d'un système de satellites répondant à l'une ou plusieurs des caractéristiques ci-avant. Cette première étape comprend notamment :
- la configuration des moyens de propulsion du satellite passager pour être aptes à réaliser le maintien de ce dernier dans son orbite de mission, et le cas échéant son transfert, en fin de vie, dans son orbite cimetière, et de préférence pour être inaptes à réaliser un transfert d'orbite du satellite passager d'une orbite initiale à son orbite de mission,
- la configuration des moyens de propulsion du satellite porteur pour être aptes à réaliser un changement d'orbite du système de satellites, comportant le satellite porteur et le satellite passager qui lui est fixé, de l'orbite initiale à l'orbite de mission du satellite passager, et le cas échéant un changement d'orbite du seul satellite porteur de l'orbite de mission du satellite passager à l'orbite de mission du satellite porteur, ainsi que le maintien du satellite porteur dans cette dernière, et son transfert, en fin de vie, dans son orbite cimetière,
- et la fixation du satellite passager au satellite porteur par les moyens d'accrochage actionnables sur commande pour provoquer la séparation du satellite porteur et du satellite passager, de manière telle que la face Terre du satellite passager soit sensiblement perpendiculaire à la face Terre dudit satellite porteur.

Le procédé selon l'invention comprend en outre des étapes successives de :
b) mise en place du système de satellites ainsi formé dans un véhicule lanceur apte à le transférer depuis la surface terrestre jusqu'à l'orbite initiale,
c) injection du système de satellites dans l'orbite initiale par le véhicule lanceur,
d) transfert du système de satellites, par les moyens de propulsion du satellite porteur, dans ou à proximité de l'orbite de mission du satellite passager,
e) séparation du satellite porteur et du satellite passager, par libération des moyens d'accrochage, de sorte à permettre la mise à poste de ce dernier dans la position orbitale souhaitée,
f) et, le cas échéant, transfert du satellite porteur dans son orbite de mission, si cette dernière est différente de l'orbite de mission du satellite passager.

Le transfert du système de satellites comportant le satellite porteur et le satellite passager, de l'orbite initiale à l'orbite de mission du satellite passager, peut le cas échéant comporter des étapes de transition dans des orbites intermédiaires.

Les étapes de mise en place du système de satellites dans le véhicule lanceur, d'injection dans l'orbite initiale et de transfert dans ou à proximité de l'orbite de mission du satellite passager sont mises en oeuvre de manière classique en elle-même. Pendant l'ensemble de ces étapes, le satellite passager demeure passif.

La séparation du satellite porteur et du satellite passager, pour la mise à poste de ce dernier dans la position orbitale souhaitée, peut s'effectuer de différentes manières connues en elles-mêmes, et choisies pour éviter tout risque de collision entre le satellite porteur et le satellite passager. Cette séparation peut s'effectuer aussi bien de manière tangentielle que radiale.

Par l'expression « à proximité de l'orbite de mission du satellite passager », on entend que la séparation du satellite passager et du satellite porteur peut être effectuée sous l'arc orbital de mission du satellite passager, mais suffisamment près de ce dernier pour qu'il soit apte à l'atteindre, par une ou plusieurs manoeuvres de correction d'orbite de faible amplitude, manoeuvres tangentielles communément appelées « Est » et « Ouest ».

Dans des modes de mise en oeuvre particuliers de l'invention, l'orbite de mission du satellite porteur et/ou du satellite passager est l'orbite géostationnaire. L'orbite initiale est quant à elle alors préférentiellement une orbite de transfert géostationnaire.

Lorsque le système de satellites comprend une pluralité de satellites passagers empilés les uns sur les autres, comme décrit ci-avant, le procédé comporte l'itération, pour chacun des satellites passagers, des étapes d) et e) ci-avant.

Dans de tels modes de mise en oeuvre, la séparation de chaque satellite passager du satellite porteur peut être effectuée simultanément ou séquentiellement. Autrement, l'ensemble des satellites portés peut être séparé du satellite porteur, puis les satellites passagers être séparés les uns des autres dans un deuxième temps.

### Brève description des figures

L'invention sera maintenant plus précisément décrite dans le cadre de modes de réalisation préférés, qui n'en sont nullement limitatifs, représentés sur les figures 1 à 3, dans lesquelles :
- la figure 1 représente de manière schématique un système de satellites selon un mode de réalisation particulier de l'invention, comportant un seul satellite passager ;
- la figure 2 représente de manière schématique un système de satellites selon un mode de réalisation particulier différent de l'invention, comportant deux satellites passagers ;
- et la figure 3 est un diagramme à blocs illustrant les étapes d'un procédé de mise à poste des satellites du système de satellites de la figure 1 ou de la figure 2.

### Description détaillée d'un mode de réalisation de l'invention

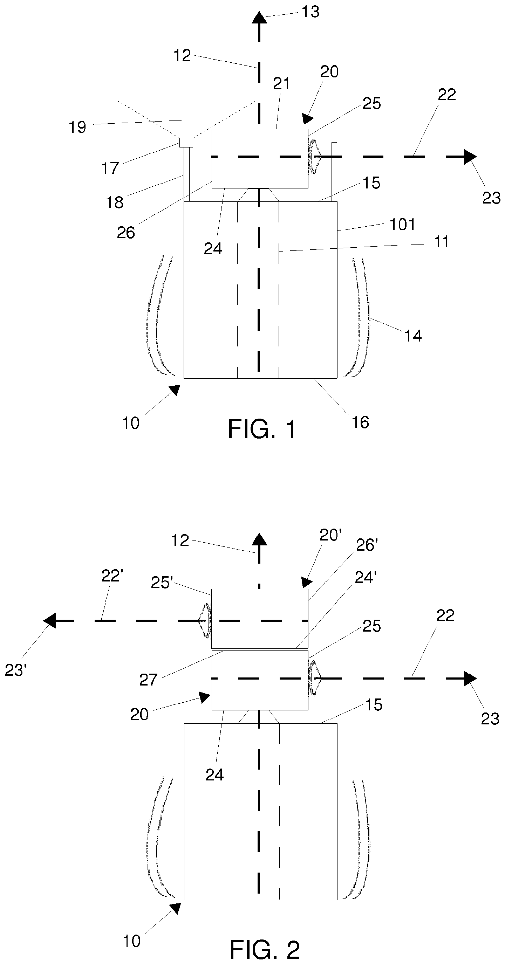

Un système de satellites selon un mode de réalisation particulier de l'invention est représenté de manière schématique sur la figure 1.

Ce système comporte un premier satellite 10, dit satellite porteur, et un deuxième satellite 20, dit satellite passager.

Chacun de ces satellites est équipé de charges utiles, d'une capacité de puissance suffisante pour fonctionner durant sa mission, d'un système de propulsion et d'une réserve d'ergol suffisants pour les manoeuvres de maintien orbital, visant à corriger la position du satellite sur son orbite de mission, et le cas échéant pour des manoeuvres de changement d'orbite.

L'ensemble de ces éléments sont bien connus de l'homme du métier et ne seront pas décrits de manière détaillée dans la présente description.

Plus particulièrement, le satellite porteur 10 comporte une structure rigide sensiblement cylindrique 11, dite structure de support, qui est représentée en pointillés sur la figure 1, car disposée à l'intérieur d'une enveloppe externe 101 du satellite porteur, et qui définit un axe longitudinal 12 du satellite porteur 10, également nommé axe Terre. Dans la position orbitale de mission du satellite porteur 10, cet axe Terre 12 joint le centre de masse du satellite et le centre de la Terre, la direction de regard de la Terre étant indiquée en 13 sur la figure 1.

De manière classique en elle-même, le satellite porteur 10 comporte des moyens de collection d'énergie solaire, sous forme de panneaux solaires en général déployables, non représentés sur la figure 1. Le satellite porteur 10 comporte en outre des moyens de communications utilisant des antennes à réflecteurs déployables 14, représentés de manière schématique sur la figure 1 en configuration repliée de lancement. La structure de support 11 supporte et protège les moyens de propulsion, les systèmes d'alimentation électrique, de contrôle et de navigation, de télémétrie et de communication, etc., équipant le satellite, ainsi que le câblage électrique. L'ensemble de ces éléments, disposés dans l'enveloppe externe 101 du satellite, n'est pas représenté sur la figure 1.

Le satellite porteur 10 comporte une face Terre 15 et une face anti-Terre opposée 16, qui sont globalement sensiblement perpendiculaires à l'axe Terre 12.

Le satellite porteur 10 est destiné à être fixé, pour son lancement, à un véhicule lanceur, non représenté sur la figure, par l'intermédiaire de sa face anti-Terre 16. Plus précisément, le satellite porteur 10 est destiné à être disposé sous la coiffe du véhicule lanceur, la face anti-Terre 16 étant alors positionnée en vis-à-vis de la surface terrestre, dans la configuration normale de lancement.

Sur sa face Terre 15, le satellite porteur 10 porte des senseurs, des antennes déployables de télémétrie, contrôle, etc., dont l'une est représentée à titre d'exemple sur la figure 1, identifiée par la référence 17, à l'extrémité d'un mât 18 qui peut lui être dédié ou consister en une extension d'un radiateur du satellite.

Les moyens de propulsion du satellite porteur 10, comprenant le système de propulsion en lui-même, tel que tuyères, vannes, réservoirs etc., et la réserve d'ergol, sont configurés de sorte à être aptes à assurer au moins un transfert d'orbite du système comportant le satellite porteur 10 et le satellite passager 20, d'une orbite initiale dans laquelle ce système est injecté par un véhicule lanceur, à une orbite de mission d'au moins un des satellites porteur 10 et/ou passager 20, et le maintien en orbite de mission du satellite porteur 10 seul.

Le satellite passager 20, pouvant être de la même classe que le satellite porteur 10 ou d'une classe différente, comporte une structure 21, qui définit son axe longitudinal, ou axe Terre, 22. La direction de regard de la Terre du satellite passager 20 dans son orbite de mission est indiquée en 23 sur la figure 1.

Le satellite passager 20 comporte, tout comme le satellite porteur 10, une face Terre 25 et une face anti-Terre 26 opposée, toutes deux globalement sensiblement perpendiculaires à l'axe Terre 22 du satellite.

Les moyens de propulsion du satellite passager 20, comprenant le système de propulsion en lui-même et la réserve d'ergol, sont configurés de sorte à être aptes à assurer au moins son maintien en orbite de mission. Préférentiellement, ils sont inaptes à assurer un transfert d'orbite du satellite passager 20 de l'orbite initiale à son orbite de mission, si bien que le poids et le volume occupé par les moyens de propulsion sont limités.

Comme illustré sur la figure 1, le satellite passager 20 est fixé sur la face Terre 15 du satellite porteur 10, à l'aplomb de la structure de support 11 du satellite porteur 10. Il y est fixé de telle sorte que son axe Terre 22 soit sensiblement perpendiculaire à l'axe Terre 12 du satellite porteur 10, c'est-à-dire que la face Terre 25 du satellite passager 20 soit globalement sensiblement perpendiculaire à la face Terre 15 du satellite porteur 10, plus précisément forme globalement avec cette dernière un angle inférieur à 10 degrés. Le satellite passager 20 est ainsi fixé sur le satellite porteur 10 par une première face dite latérale 24, distincte des faces Terre 25 et anti-Terre 26.

Une telle disposition du satellite passager 20 sur le satellite porteur 10 s'avère tout à fait avantageuse en terme d'optimisation du volume sous coiffe du véhicule lanceur. En effet, elle permet d'empiler sur le satellite porteur 10 un satellite passager 20 présentant un volume important, et notamment une face Terre 25, qui porte les équipements de communication, de grande surface. Dans une telle disposition, une augmentation du volume du satellite passager 20 est en effet avantageusement peu contrainte par les dimensions de la coiffe du véhicule lanceur.

En outre, une telle disposition du satellite passager 20 sur le satellite porteur 10 permet avantageusement d'accommoder facilement, sur la face Terre 15 du satellite porteur 10, des senseurs et/ou antennes 17 nécessitant, en particulier dans la phase de transfert d'orbite du système formé du satellite porteur 10 et du satellite passager 20, de l'orbite initiale vers l'orbite de mission, un champ de vue 19 large et incluant l'axe Terre 12 du satellite porteur 10. Comme illustré sur la figure 1, l'obtention d'un tel résultat ne nécessite pas la mise en oeuvre d'un mât 18 de très grande longueur portant le senseur ou l'antenne 17.

La fixation du satellite passager 20 sur le satellite porteur 10 est réalisée par des moyens d'accrochage libérables sur commande et sans génération de débris, par exemple par une série de boulons pyrotechniques.

L'interface entre le satellite porteur 10 et le satellite passager 20 est en outre réduite au minimum, et réalisée de telle sorte qu'aucun bus de données ne relie les deux satellites, ni leurs avioniques entre elles. Le satellite passager 20 est avantageusement configuré pour rester passif tant qu'il est fixé au satellite porteur 10. Le système comporte des moyens d'asservissement de la mise en marche du satellite passager 20 à la libération des moyens d'accrochage, si bien que le satellite passager 20 est automatiquement mis en marche lors de sa séparation du satellite porteur 10. Ces moyens d'asservissement sont notamment disposés dans le satellite passager 20. La commande de libération des moyens d'accrochage est quant à elle préférentiellement réalisée depuis le satellite porteur 10.

Tant que le satellite passager 20 est attaché au satellite porteur 10, son avionique étant éteinte, le système est de préférence configuré de telle sorte que le satellite porteur 10 soit apte à réchauffer le satellite passager 20, via une extension sur le satellite passager de son harnais de réchauffage (non visible sur la figure 1). Ce harnais de réchauffage est préférentiellement commandé et alimenté par des moyens prévus à cet effet localisés dans le satellite porteur 10.

Le système peut en outre comporter un mécanisme dit de trickle charge permettant d'éviter la décharge des batteries du satellite passager 20 tant que celui-ci est fixé au satellite porteur 10.

Un mode de réalisation différent du système de satellites selon l'invention est représenté de manière schématique sur la figure 2.

Ce système comporte un satellite porteur 10 et un satellite passager 20, similaires à ceux décrits ci-avant en référence à la figure 1, et disposés similairement l'un par rapport à l'autre.

Il comporte en outre un deuxième satellite passager 20', qui peut être identique ou différent du premier satellite passager 20, mais qui en reprend les caractéristiques décrites ci-avant, notamment concernant les moyens de propulsion.

Ce deuxième satellite passager 20' comporte un axe Terre 22', une face Terre 25' et une face anti-Terre 26' opposée. Il est empilé sur le premier satellite passager 20, de telle sorte que son axe Terre 22' soit sensiblement perpendiculaire à l'axe Terre 12' du satellite porteur 10, et sensiblement parallèle à l'axe Terre 22 du premier satellite passager 20. Dans le mode de réalisation particulier représenté sur la figure 2, le deuxième satellite passager 20' est fixé, par une face dite latérale 24' distincte de la face Terre 25' et de la face anti-Terre 26', à une face latérale 27 du premier satellite passager 20 opposée à la première face latérale 24.

L'empilement des deux satellites passagers 20, 20' sur le satellite porteur 10 est de préférence réalisé selon l'axe longitudinal 12 de ce dernier.

Dans le mode de réalisation particulier représenté sur la figure 2, les deux satellites passagers 20, 20' sont par exemple disposés en tête-bêche, c'est-à-dire que leurs faces Terre respectives 25, 25' sont disposées à l'opposé l'une de l'autre. Il est entendu que d'autres orientations respectives des faces Terre des satellites passagers sont envisageables.

La disposition particulière des satellites passagers par rapport au satellite porteur conforme à l'invention permet d'empiler sur ce dernier une pluralité de satellites passagers les uns sur les autres, en occupant le volume disponible sous la coiffe du véhicule lanceur de manière optimale, et en faisant supporter le poids des satellites passagers par la structure de support 11 du satellite porteur 10, qui est intrinsèquement suffisamment résistante à cet effet. Cet empilement ne nécessite ainsi avantageusement aucune modification spécifique de la structure du satellite porteur 10.

Le deuxième satellite passager 20' est fixé sur le premier satellite passager 20 par des moyens d'accrochage, libérables sur commande pour la séparation des satellites passagers l'un de l'autre. La commande de libération de ces moyens d'accrochage peut être réalisée depuis le satellite porteur 10, ou depuis le premier satellite passager 20, selon la séquence de séparation de l'ensemble de ces satellites envisagée.

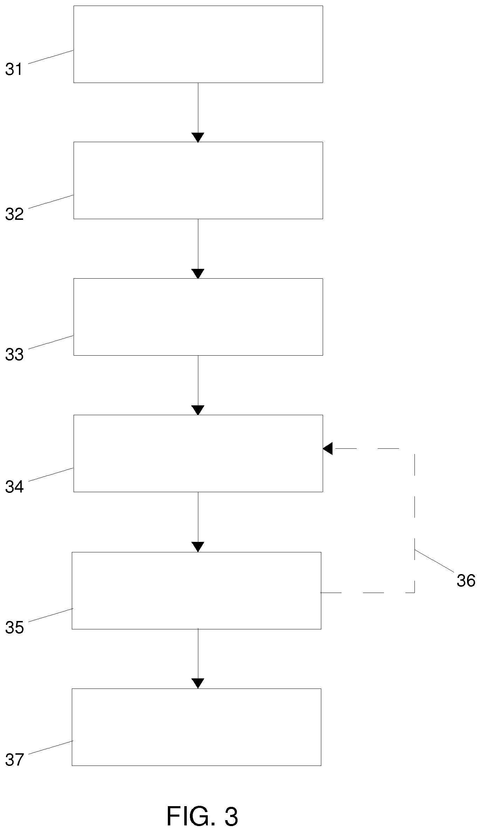

Les différentes étapes d'un exemple non limitatif de procédé de mise à poste sur leur orbite de mission des satellites des systèmes de satellites décrits ci-avant en référence aux figures 1 et 2, sont illustrées de manière schématique sur la figure 3.

Dans une première étape 31, le satellite passager 20 est fixé sur le satellite porteur 10, par les moyens d'accrochage, de sorte que les faces Terre respectives 15, 25 de ces satellites soient disposées globalement sensiblement perpendiculairement l'une par rapport à l'autre. Ces opérations sont réalisées sur la surface terrestre.

Dans une deuxième étape 32, le système de satellites ainsi formé est assemblé sous la coiffe d'un véhicule lanceur, de manière classique en elle-même.

L'étape suivante 33 consiste en le lancement depuis la surface terrestre et l'injection du système de satellites, toujours fixés l'un à l'autre, dans l'orbite initiale, par exemple une orbite de transfert géostationnaire.

Le système de satellites est ensuite transféré, en étape 34, au moyen du système de propulsion du satellite porteur 10, dans l'orbite de mission du satellite passager 20, par exemple l'orbite géostationnaire.

L'étape suivante 35 est la séparation du satellite passager 20 et du satellite porteur 10, par libération des moyens d'accrochage déclenchée par le satellite porteur 10.

Lorsque le système comporte une pluralité de satellites passagers 20, 20', l'ensemble de ces satellites passagers peut être décroché du satellite porteur 10 à cette étape. Autrement, les étapes 34 et 35 peuvent être réitérées pour chaque satellite passager, comme indiqué en 36 sur la figure 3.

Enfin, en étape finale 37, chaque satellite est amené, par son propre système de propulsion, à sa position opérationnelle.

Chacune de ces étapes est réalisée de manière classique en elle-même.

L'exemple de procédé conforme à l'invention décrit ci-dessus de manière schématique n'est nullement limitatif de l'invention, et toute variante entre également dans le cadre de l'invention.

## Revendications

1. Système de satellites, comportant un premier satellite (10), dit satellite porteur, et un deuxième satellite (20), dit satellite passager, chacun desdits satellites comportant une face Terre (15, 25), dans lequel :
- ledit satellite passager (20) est fixé audit satellite porteur (10) par des moyens d'accrochage libérables sur commande pour provoquer la séparation dudit satellite porteur (10) et dudit satellite passager (20),
- ledit satellite passager (20) comporte des moyens de propulsion aptes à réaliser le maintien dudit satellite passager (20) en orbite,
- et ledit satellite porteur (10) comporte des moyens de propulsion aptes à réaliser un changement d'orbite dudit satellite porteur (10) et dudit satellite passager (20) fixé sur ledit satellite porteur (10),
**caractérisé en ce que** ledit satellite passager (20) est fixé sur la face Terre (15) du satellite porteur (10), de manière telle que la face Terre (25) dudit satellite passager (20) est sensiblement perpendiculaire à la face Terre (15) dudit satellite porteur (10).

2. Système de satellites selon la revendication 1, dans lequel le satellite porteur (10) et le satellite passager (20) sont disposés dans un même véhicule lanceur.

3. Système de satellites selon l'une quelconque des revendications 1 à 2, dans lequel le satellite porteur (10) et le satellite passager (20) ne partagent pas de bus de données.

4. Système de satellites selon l'une quelconque des revendications 1 à 3, comportant des moyens d'asservissement de la mise en marche du satellite passager (20) à la libération des moyens d'accrochage pour la séparation du satellite porteur (10) et dudit satellite passager (20).

5. Système de satellites selon l'une quelconque des revendications 1 à 4, dans lequel le satellite porteur (10) comporte une structure rigide (11) dite de support sensiblement cylindrique qui définit un axe longitudinal (12) dudit satellite porteur (10) s'étendant entre la face Terre (15) et une face dite anti-Terre opposée (16) dudit satellite porteur (10), et ledit satellite passager (20) est fixé sur ladite structure de support (11).

6. Système de satellites selon l'une quelconque des revendications 1 à 5, comportant des moyens de réchauffage du satellite passager (20), comprenant des lignes de réchauffage localisées dans ledit satellite passager (20) et des moyens de commande et d'alimentation électrique desdites lignes de réchauffage localisés dans le satellite porteur (10).

7. Système de satellites selon l'une quelconque des revendications 1 à 6, comportant une pluralité de satellites passagers (20, 20') empilés les uns au-dessus des autres sur la face Terre (15) du satellite porteur (10), la face Terre (25, 25') de chacun desdits satellites passagers (20, 20') étant sensiblement perpendiculaire à ladite face Terre (15) dudit satellite porteur (10).

8. Procédé de mise à poste sur son orbite de mission de chacun des satellites d'un ensemble de satellites comportant un premier satellite (10), dit satellite porteur, et un deuxième satellite (20), dit satellite passager, chacun desdits satellites comportant une face Terre (15, 25), ledit procédé comprenant des étapes de :
a) formation d'un système de satellites selon l'une quelconque des revendications 1 à 7,
b) mise en place dudit système de satellites dans un véhicule lanceur apte à le transférer depuis la surface terrestre jusqu'à une orbite initiale,
c) injection dudit système de satellites dans ladite orbite initiale par ledit véhicule lanceur,
d) transfert dudit système de satellites, par les moyens de propulsion dudit satellite porteur (10), dans ou à proximité de l'orbite de mission dudit satellite passager (20),
e) séparation dudit satellite porteur (10) et dudit satellite passager (20), par libération des moyens d'accrochage,
f) et, le cas échéant, transfert dudit satellite porteur (10) dans son orbite de mission.

9. Procédé selon la revendication 8, selon lequel l'orbite de mission du satellite porteur (10) et/ou du satellite passager (20) est l'orbite géostationnaire.

10. Procédé selon l'une quelconque des revendications 8 à 9, comprenant des étapes de :
- formation d'un système de satellites selon la revendication 7, comportant une pluralité de satellites passagers (20, 20'),
- et itération des étapes d) et e) pour chacun desdits satellites passagers (20, 20').

## Patentansprüche

1. Satellitensystem, das einen ersten Satelliten (10), Trägersatellit genannt, und einen zweiten Satelliten (20), Passagier-Satellit genannt, aufweist, wobei jeder der Satelliten eine Erdseite (15, 25) aufweist, wobei:
- der Passagier-Satellit (20) am Trägersatellit (10) durch auf Befehl freigebbare Befestigungseinrichtungen befestigt ist, um die Trennung des Trägersatelliten (10) und des Passagier-Satelliten (20) zu bewirken,
- der Passagier-Satellit (20) Antriebseinrichtungen aufweist, die den Halt des Passagier-Satelliten (20) in der Umlaufbahn verwirklichen können,
- und der Trägersatellit (10) Antriebseinrichtungen aufweist, die eine Umlaufbahnänderung des Trägersatelliten (10) und des am Trägersatelliten (10) befestigten Passagier-Satelliten (20) verwirklichen können,
**dadurch gekennzeichnet, dass** der Passagier-Satellit (20) an der Erdseite (15) des Trägersatelliten (10) so befestigt ist, dass die Erdseite (25) des Passagier-Satelliten (20) im Wesentlichen lotrecht zur Erdseite (15) des Trägersatelliten (10) ist.

2. Satellitensystem nach Anspruch 1, wobei der Trägersatellit (10) und der Passagier-Satellit (20) in der gleichen Trägerrakete angeordnet sind.

3. Satellitensystem nach einem der Ansprüche 1 bis 2, wobei der Trägersatellit (10) und der Passagier-Satellit (20) sich keinen Datenbus teilen.

4. Satellitensystem nach einem der Ansprüche 1 bis 3, das Regeleinrichtungen des Starts des Passagier-Satelliten (20) beim Freigeben der Befestigungseinrichtungen zur Trennung des Trägersatelliten (10) und des Passagier-Satelliten (20) aufweist.

5. Satellitensystem nach einem der Ansprüche 1 bis 4, wobei der Trägersatellit (10) eine im Wesentlichen zylindrische steife so genannte Trägerstruktur (11) aufweist, die eine Längsachse (12) des Trägersatelliten (10) definiert, die sich zwischen der Erdseite (15) und einer gegenüberliegenden so genannten Gegenerdseite (16) des Trägersatelliten (10) erstreckt, und der Passagier-Satellit (20) an der Trägerstruktur (11) befestigt ist.

6. Satellitensystem nach einem der Ansprüche 1 bis 5, das Einrichtungen zum Aufwärmen des Passagier-Satelliten (20), die Aufwärmleitungen enthalten, die sich im Passagier-Satelliten (20) befinden, und Steuer- und Stromversorgungseinrichtungen der im Trägersatelliten (10) befindlichen Aufwärmleitungen aufweist.

7. Satellitensystem nach einem der Ansprüche 1 bis 6, das eine Vielzahl von Passagier-Satelliten (20, 20') aufweist, die auf der Erdseite (15) du Trägersatelliten (10) übereinander gestapelt sind, wobei die Erdseite (25, 25') jedes der Passagier-Satelliten (20, 20') im Wesentlichen lotrecht zur Erdseite (15) des Trägersatelliten (10) ist.

8. Verfahren zur Positionierung jedes der Satelliten einer Gruppe von Satelliten, die einen ersten Satelliten (10), Trägersatellit genannt, und einen zweiten Satelliten (20), Passagier-Satellit genannt, aufweist, in seiner Einsatzumlaufbahn, wobei jeder der Satelliten eine Erdseite (15, 25) aufweist, wobei das Verfahren Schritte aufweist:
a) der Bildung eines Satellitensystems nach einem der Ansprüche 1 bis 7,
b) der Anordnung des Satellitensystems in einer Trägerrakete, die es von der Erdoberfläche bis in eine Anfangsumlaufbahn übertragen kann,
c) des Einschießens des Satellitensystems in die Anfangsumlaufbahn durch die Trägerrakete,
d) des Transfers des Satellitensystems durch die Antriebseinrichtungen des Trägersatelliten (10) in oder in die Nähe der Einsatzumlaufbahn des Passagier-Satelliten (20),
e) des Trennens des Trägersatelliten (10) und des Passagier-Satelliten (20) durch Freigeben der Befestigungseinrichtungen,
f) und ggf. des Transfers des Trägersatelliten (10) in seine Einsatzumlaufbahn.

9. Verfahren nach Anspruch 8, wobei die Einsatzumlaufbahn des Trägersatelliten (10) und/oder des Passagier-Satelliten (20) die geostationäre Umlaufbahn ist.

10. Verfahren nach einem der Ansprüche 8 bis 9, das Schritte enthält:
- der Bildung eines Satellitensystems nach Anspruch 7, das eine Vielzahl von Passagier-Satelliten (20, 20') aufweist,
- und der Wiederholung der Schritte d) und e) für jeden der Passagier-Satelliten (20, 20').

## Claims

1. A satellite system, comprising a first satellite (10), called carrier satellite, and a second satellite (20), called piggyback satellite, each of said satellites comprising an Earth face (15, 25), wherein:
- said piggyback satellite (20) is fixed to said carrier satellite (10) by attachment means that can be released on command to provoke the separation of said carrier satellite (10) and of said piggyback satellite (20),
- said piggyback satellite (20) comprises propulsion means suitable for keeping said piggyback satellite (20) in orbit,
- and said carrier satellite (10) comprises propulsion means suitable for performing a change of orbit of said carrier satellite (10) and of said piggyback satellite (20) fixed to said carrier satellite (10),
**characterized in that** said piggyback satellite (20) is fixed onto the Earth face (15) of the carrier satellite (10), such that the Earth face (25) of said piggyback satellite (20) is substantially at right angles to the Earth face (15) of said carrier satellite (10).

2. The satellite system as claimed in claim 1, wherein the carrier satellite (10) and the piggyback satellite (20) are arranged in a same launch vehicle.

3. The satellite system as claimed in either of claims 1 and 2, wherein the carrier satellite (10) and the piggyback satellite (20) do not share any data bus.

4. The satellite system as claimed in any one of claims 1 to 3, comprising means for slaving the starting up of the piggyback satellite (20) to the releasing of the attachment means for the separation of the carrier satellite (10) and of said piggyback satellite (20).

5. The satellite system as claimed in any one of claims 1 to 4, wherein the carrier satellite (10) comprises a substantially cylindrical rigid so-called support structure (11) which defines a longitudinal axis (12) of said carrier satellite (10) extending between the Earth face (15) and an opposite so-called anti-Earth face (16) of said carrier satellite (10), and said piggyback satellite (20) is fixed onto said support structure (11).

6. The satellite system as claimed in any one of claims 1 to 5, comprising means for heating up the piggyback satellite (20), comprising heating lines located in said piggyback satellite (20) and means for controlling and electrically powering said heating lines located in the carrier satellite (10).

7. The satellite system as claimed in any one of claims 1 to 6, comprising a plurality of piggyback satellites (20, 20') stacked one on top of the other on the Earth face (15) of the carrier satellite (10), the Earth face (25, 25') of each of said piggyback satellites (20, 20') being substantially at right angles to said Earth face (15) of said carrier satellite (10).

8. A method for stationing on its mission orbit each of the satellites of a set of satellites comprising a first satellite (10), called carrier satellite, and a second satellite (20), called piggyback satellite, each of said satellites comprising an Earth face (15, 25), said method comprising steps of:
a) formation of a satellite system as claimed in any one of claims 1 to 7,
b) placement of said satellite system in a launch vehicle suitable for transferring it from the Earth's surface to an initial orbit,
c) injection of said satellite system into said initial orbit by said launch vehicle,
d) transfer of said satellite system, by the propulsion means of said carrier satellite (10), into or in proximity to the mission orbit of said piggyback satellite (20),
e) separation of said carrier satellite (10) and of said piggyback satellite (20), by releasing of the attachment means,
f) and, if appropriate, transfer of said carrier satellite (10) into its mission orbit.

9. The method as claimed in claim 8, wherein the mission orbit of the carrier satellite (10) and/or of the piggyback satellite (20) is the geostationary orbit.

10. The method as claimed in either of claims 8 to 9, comprising steps of:
- formation of a satellite system as claimed in claim 7, comprising a plurality of piggyback satellites (20, 20'),
- and iteration of the steps d) and e) for each of said piggyback satellites (20, 20').
